# EUROPEAN PATENT APPLICATION

(11) **EP 4 629 466 A1**
(43) Date of publication of application: **08.10.2025**
(21) Application number: 24168107.1
(22) Date of filing: 02.04.2024
(51) Int. Cl.: H02J 3/36, H02M 1/00, H02H 1/00, H02H 9/02, H02M 1/32, H02M 7/48

(54) **METHOD AND CONTROLLER FOR CONTROLLING A POWER TRANSMISSION NETWORK**

(71) Applicant: GE Vernova Technology GmbH, 5400 Baden (CH)
(72) Inventor: JASIM, Omar, Staffordshire, ST16 1WS (GB); KUMAR, Amit, Staffordshire, ST16 1WS (GB)
(74) Representative: Openshaw & Co.

(57) **Abstract**

There is provided a controller (200), and a method, for controlling a power dissipating arrangement (230) connected to a converter station (160), wherein the converter station (160) comprises a power converter (120) that is connected to a power transmission medium (130). The controller (200) is configured to: determine a parameter associated with the power converter (120); use the parameter to determine a control signal (203) for the power dissipating arrangement (230); and provide the control signal (203) to the power dissipating arrangement (230). The power dissipating arrangement (230) is configured to use the control signal (203) to control a switching of the power dissipating arrangement (230) to dissipate energy from the power transmission medium (130) and reduce a transfer of energy between the power transmission medium (130) and the power converter (120).

## Description

### FIELD OF THE INVENTION

The present invention relates to a method and a controller for controlling a power transmission network, and more particularly for controlling a power dissipating arrangement in a power transmission network.

### BACKGROUND

In high voltage direct current (HVDC) power transmission networks, alternating current (AC) power is typically converted to direct current (DC) power for transmission via overhead lines, under-sea cables and/or underground cables, also known as a transmission medium. This conversion removes a need to compensate for the AC reactive/capacitive load effects imposed by the power transmission medium, i.e., the transmission line or cable, and reduces the cost per kilometre of the lines and/or cables. The conversion tends to be beneficial, for example when power is transmitted over a long distance. DC power can also be transmitted directly from offshore wind parks to onshore AC power transmission networks, for instance.

The conversion between DC power and AC power is utilised where it is necessary to interconnect DC and AC power, for example between an AC grid and a HVDC transmission line. In power transmission networks, power conversion means, also known as power converters (i.e., power converters in converter stations, power electronics-based resources, power inverters etc.) are required at each interface or interconnection between AC and DC power to implement the required conversion from AC to DC or from DC to AC.

A HVDC transmission network typically includes a transmission medium with a power converter connected on either side of the transmission medium. A power dissipating arrangement is usually included in close proximity to the power converter. The power converter and power dissipating arrangement may be part of a converter station.

### SUMMARY OF THE INVENTION

In a case where there is an instantaneous decrease in power exported from the power converter, for example due to a fault or load change in the transmission network, the power dissipating arrangement is controlled by a conventional controller to dissipate energy in the transmission medium. The conventional controller tends to control the power dissipating arrangement based on a DC voltage of the transmission medium. The present inventors have realised that this approach tends to be slow and can lead to excessive charging of the power converter.

In light of these considerations, it is desired to develop a controller and methods that provide improved control over a power dissipating arrangement.

According to a first aspect, there is provided a controller for controlling a power dissipating arrangement connected to a converter station, wherein the converter station comprises a power converter that is connected to a power transmission medium, the controller configured to: determine a parameter associated with the power converter; use the parameter to determine a control signal for the power dissipating arrangement; and provide the control signal to the power dissipating arrangement, wherein the power dissipating arrangement is configured to use the control signal to control a switching of the power dissipating arrangement to dissipate energy from the power transmission medium and reduce a transfer of energy between the power transmission medium and the power converter.

In other words, the controller is configured to provide the control signal to switches of the power dissipating arrangement, whereby to cause the power dissipating arrangement to dissipate energy from the power transmission medium and reduce a transfer of energy between the power transmission medium and the power converter.

The power dissipating arrangement may be a dynamic braking system.

To determine the parameter associated with the power converter the controller may be configured to determine an energy level associated with the power converter.

The controller may be further configured to compare the energy level to a reference energy level to determine an energy difference.

The parameter may be the energy difference.

The energy level may be an instantaneous energy level.

The energy level may be an energy level of the power converter.

The energy level may be an energy level of capacitors of the power converter.

The controller configured to use the parameter to determine the control signal may comprise the controller configured to: in response to the energy difference exceeding a threshold value, determine the control signal.

The power converter may comprise a plurality of valves, and each valve may comprise a plurality of capacitors. To determine the energy level associated with the power converter, the controller may be configured to: receive, for each of the plurality of capacitors, a respective capacitor voltage value; and calculate an average amount of energy stored in the pluralities of capacitors using the received respective capacitor voltage values. The energy level associated with the power converter may be the average amount of energy stored in the pluralities of capacitors.

The power converter may comprise a plurality of valves, and each valve may comprise a plurality of capacitors. To determine the energy level associated with the power converter, the controller may be configured to: receive, for each of the plurality of capacitors, a respective capacitor voltage value; calculate an amount of energy stored in each of the plurality of capacitors using the received respective capacitor voltage values; and sum the amount of energy stored in each of the plurality of capacitors to determine a total amount of energy in the pluralities of capacitors. The energy level associated with the power converter may be the total amount of energy stored in the pluralities of capacitors.

The threshold value may be less than or equal to 5%, or 0.05 per unit, of the reference energy level.

The controller may further comprise a DBS module configured to determine the control signal.

The controller may be further configured to: determine a response signal based on the energy difference.

To determine the response signal the controller may be configured to filter and/or scale the energy difference.

The control signal may be a modulated signal that has a duty cycle, magnitude or frequency that is proportional to the response signal.

The control signal may be a Pulse Width Modulation signal having a duty cycle or frequency that is proportional to the response signal.

The control signal may be a modulated square wave having a magnitude or frequency that is proportional to the response signal.

To compare the energy level to the reference energy level, the controller may be configured to subtract the energy level from the reference energy level; and output the result as the energy difference.

The controller may be configured to receive a measured DC voltage of the transmission medium; compare the measured DC voltage with a reference DC voltage to determine a voltage difference; implement a Proportional-Integral controller based on the voltage difference to determine a current demand; sum the current demand and the response signal to determine a combined demand; and use the combined demand to determine the control signal.

The control signal may be a modulated signal that has a duty cycle, magnitude or frequency that is proportional to the combined demand.

The control signal may be a Pulse Width Modulation signal having a duty cycle or frequency that is proportional to the combined demand.

The control signal may be a modulated square wave having a magnitude or frequency that is proportional to the combined demand.

To compare the measured DC voltage with the reference DC voltage the controller may be configured to subtract the reference DC voltage from the measured DC voltage.

According to a second aspect, there is provided a system for use with a power transmission network. The system comprises a power dissipating arrangement connected to the power transmission network; and the controller as described above, the controller being configured to control the power dissipating arrangement.

The power dissipating arrangement may comprise a plurality of submodules. The plurality of submodules may be configured as a controllable voltage source.

Each submodule may comprise switching elements and an energy storage device.

The power dissipating arrangement may comprise an energy dissipation device.

The energy dissipation device may be connected in series with the plurality of submodules.

The system may be configured to use the control signal to modulate the switching elements in the plurality of submodules, in order to control a transfer of energy from the power transmission network to the energy dissipation device.

The power dissipating arrangement may comprise a plurality of submodules. The plurality of submodules may be configured as a controllable voltage source.

Each submodule may comprise switching elements, a resistive element, and an energy storage device.

The system may be configured to use the control signal to modulate the switching elements in the plurality of submodules, in order to control a transfer of energy from the power transmission network to the resistive elements of the plurality of submodules.

The power dissipating arrangement may comprise a plurality of switches.

The switches may be configured to connect or disconnect the power dissipating arrangement from the power transmission network.

The power dissipating arrangement may comprise an energy dissipation device.

The energy dissipation device may be connected in series with the plurality of switches.

The system may be configured to use the control signal to modulate the plurality of switches, in order to control a transfer of energy from the power transmission network to the energy dissipation device.

According to a third aspect, there is provided a converter station for a power transmission network, the converter station comprising: a power converter connected to a transmission medium; and the system of the second aspect.

According to a fourth aspect, there is provided a power transmission network comprising an AC network; a power transmission medium; a converter station configured to transfer energy between the power transmission medium and the AC network; and the system of the second aspect.

According to a fifth aspect, there is provided a method for controlling a power dissipating arrangement connected to a converter station, wherein the converter station comprises a power converter that is connected to a power transmission medium. The method comprises: determining, by a controller, a parameter associated with the power converter; using, by the controller, the parameter to determine a control signal for the power dissipating arrangement; and providing, by the controller, the control signal to the power dissipating arrangement. The power dissipating arrangement uses the control signal to control a switching of the power dissipating arrangement to dissipate energy from the power transmission medium and reduce a transfer of energy between the power transmission medium and the power converter.

Determining the parameter associated with the power converter may comprise determining, by the controller, an energy level associated with the power converter.

Determining the parameter associated with the power converter may comprise comparing, by the controller, the energy level to a reference energy level to determine an energy difference.

The parameter may be the energy difference.

Using the parameter to determine the control signal may comprise determining, by the controller, the control signal in response to the energy difference exceeding a threshold value.

The power converter may comprise a plurality of valves, and each valve may comprise a plurality of capacitors. Determining the energy level associated with the power converter may comprise receiving, by the controller, for each of the plurality of capacitors, a respective capacitor voltage value; and calculating an average amount of energy stored in the pluralities of capacitors using the received respective capacitor voltage values. The energy level associated with the power converter may be the average amount of energy stored in the pluralities of capacitors.

Generally, the controller tends to be configured to execute the methods described herein.

According to a sixth aspect, there is provided a computer program comprising instructions which when executed by a processor of a controller for controlling a power dissipating arrangement, cause the controller to perform the method of the fifth aspect.

According to a seventh aspect, there is provided a non-transitory computer-readable storage medium comprising the computer program of the sixth aspect.

It will be appreciated that particular features of different aspects of the invention share the technical effects and benefits of corresponding features of other aspects of the invention. More specifically, the controller, the system, the converter station, the power transmission network, the computer program, and the non-transitory computer-readable medium, share the technical effects and benefits of the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples, and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### BRIEF DESCRIPTION OF THE DRAWINGS

Figure 1 is a schematic illustration of a power transmission network including a converter station;
Figure 2 is a schematic illustration of a converter station, a controller, and a power dissipating arrangement;
Figure 3 is a schematic illustration of a controller for controlling a power dissipating arrangement;
Figure 4 is a process flow chart showing steps of a method for controlling the power dissipating arrangement;
Figure 5 is a process flow chart showing steps of a process performed during the method of Figure 4; and
Figure 6 is a process flow chart showing steps of a further process performed during the method of Figure 4.

### DETAILED DESCRIPTION

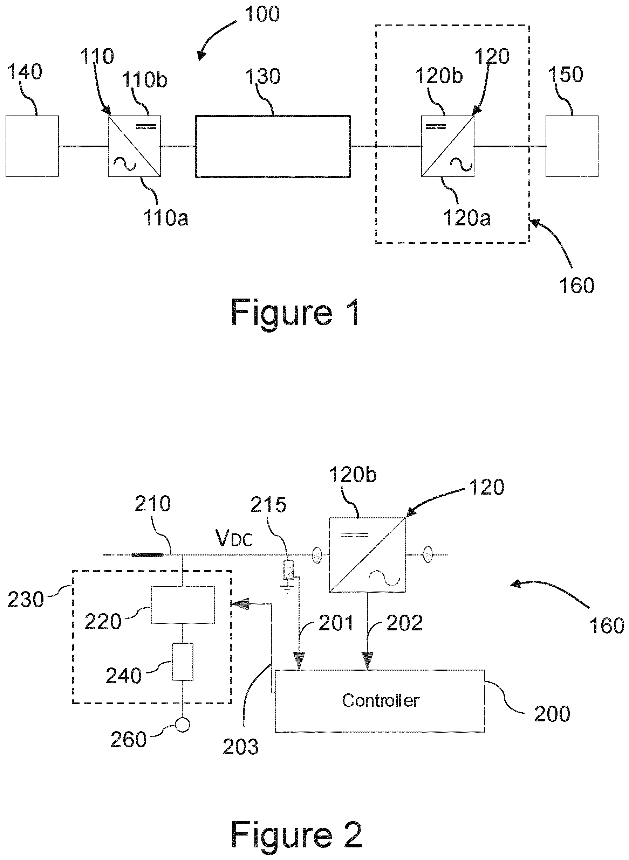

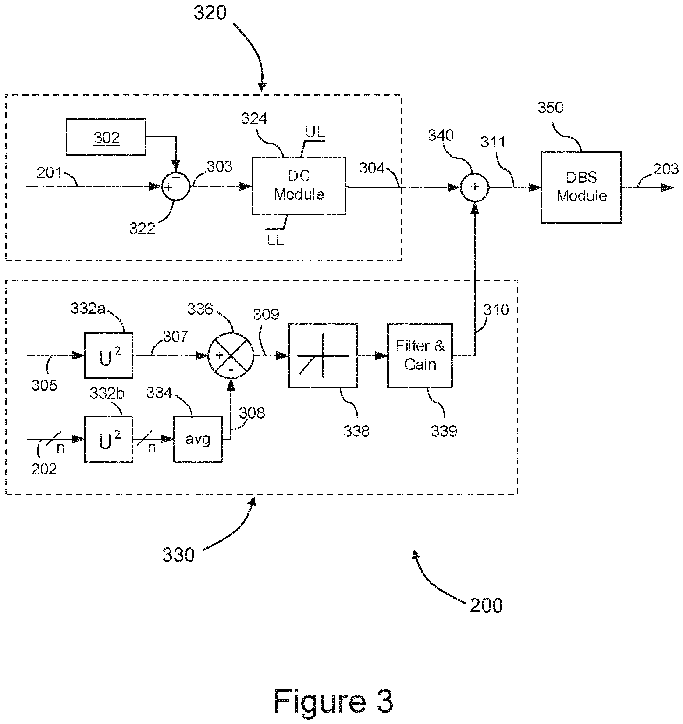

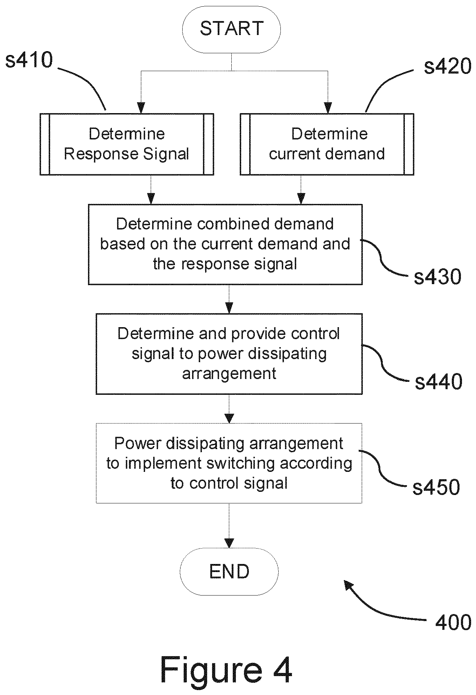

Figure 1 is a schematic illustration (not to scale) showing, generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 shown in Figures 2 and 3, for instance; or networks comprising a power dissipating arrangement controlled according to a method 400 shown in Figures 4, 5 and 6.

The power transmission network 100 includes a first power converter 110 (also known as a converter station, power electronics-based resource, inverter, inverter station, etc.), a second power converter 120, a transmission medium 130, a first AC network 140, a second AC network 150, and a converter station 160.

The power converters 110, 120, can convert AC power to DC power, acting essentially as rectifiers; or DC power to AC power, acting essentially as inverters. The power converters 110, 120 may each comprise a single converter in the case of a monopole system, or two converters in the case of a bipole system. The power converters 110, 120 may represent a plurality of converter stations arranged as a multi-terminal power transmission system. Generically, the first power converter 110 comprises a first AC side 110a and a first DC side 110b. Generically, the second power converter 120 comprises a second AC side 120a and a second DC side 120b.

The first power converter 110 is connected to a first AC network 140. The first AC network 140 is connected to the first AC side 110a of the first power converter 110. The second power converter 120 is connected to a second AC network 150. The second AC network 150 is connected to the second AC side 120a of the second power converter 120.

The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance. In particular examples, the power converters 110, 120 may be geographically remote from each other. For instance, the first power converter 110 may reside on an off-shore platform with a wind farm, and the second power converter 120 may reside onshore.

The power transmission medium 130 connects the first power converter 110 and the second power converter 120. The power transmission medium 130 is connected between the first DC side 110b of the first power converter 110 and the second DC side 120b of the second power converter 120. The power transmission medium 130 may comprise electrical cables (or overhead lines) and other electrical components for connecting the first and second power converters 110, 120. For instance, the power transmission medium 130 may comprise a conductor providing a first electrical pole and/or a conductor providing a second electrical pole. For bipole schemes, a neutral arrangement may also be provided interconnecting the first and second power converters 110, 120. The power transmission medium 130 provides the medium through which DC power is transferred between the power converters 110, 120.

The operation of the power transmission system 100 can be generically described as follows. The first AC network 140 generates AC power that is provided to the first power converter 110 at the first AC side 11 0a. The first power converter 110 converts the received AC power to DC power for transmission to the transmission medium 130. The DC power is transmitted from the first DC side 110b of the first power converter 110 to the transmission medium 130. The second DC side 120b of the second power converter 120 receives DC power from the transmission medium 130. The second power converter 120 converts the received DC power to AC power. The AC power is then provided from the second AC side 120a of the second power converter 120 to the second AC network 150 for consumption, for instance.

Additionally, in some circumstances, the first power converter 110 can also receive power from the transmission medium 130. The first power converter 110 can thus be configured to transfer real or reactive power in either direction, into or out of the first AC network 140. The second power converter 120 can also be configured to transfer real or reactive power in either direction, into or out of the second AC network 150.

It will be appreciated that various other electrical components may be located at any particular location or with any particular feature/component in the example 100. These may include power converter valves, switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use power electronics. Power electronic converters may comprise multi-level voltage sourced converters, for instance.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

Figure 2 is a schematic illustration (not to scale) showing the converter station 160 and a system. In this embodiment, the converter station 160 comprises the second power converter 120, a terminal 260, and a measurement device 215. The system comprises a power dissipating arrangement 230 and a controller 200. Also shown in Figure 2 is an end portion 210 of the transmission medium 130.

In this embodiment, the power dissipating arrangement 230 comprises a switching device 220 and an energy dissipation device 240.

In this embodiment, the second DC side 120b of the second power converter 120 is connected to the end portion 210 of the transmission medium 130. The switching device 220 is connected to the end portion 210 of the transmission medium 130 and to the energy dissipation device 240. The energy dissipation device 240 is connected in series between the switching device 220 and the terminal 260. The terminal 260 is connected to another pole of the power converter 120.

In this embodiment, the energy dissipation device 240 is a high-power resistor.

In this embodiment, the switching device 220 comprises a plurality of series connected submodules (not shown). Each submodule includes switching elements connected in parallel with an energy storage device in the form of a capacitor, although other types of energy storage device may also be used.

The plurality of submodules is configured such that switching of the switching elements selectively directs current through the capacitor or causes current to bypass the capacitor, such that the switching device 220 can be controlled as a voltage sourced converter.

The measurement device 215 is configured to measure a DC voltage of the transmission medium 130, and provide a measured DC voltage 201 to the controller 200 for control purposes, as discussed in more detail further below.

The controller 200 is also configured to receive data 202 from the second power converter 120. The data 202 comprises information related to electrical parameters of the power converter 120, such as operating currents, capacitor voltages, energy, and/or power output.

The data 202 received from the second power converter 120 is used by the controller 200 for control purposes. In particular, the controller 200 is configured to use the measured DC voltage 201 and/or the data 202 to determine a control signal 203, or an actuating signal, for the power dissipating arrangement 230.

The controller 200 is configured to control the power dissipating arrangement 230, in particular in this embodiment the switching device 220, by providing the control signal 203, to control (for example, reduce or increase) a transfer of energy between the power transmission medium 130 and the power converter 120, or the second AC network 150 and the power transmission medium 130, as will now be discussed.

In a normal operation, energy is transferred from the first AC network 140 to the second AC network 150, via the first power converter 110, the transmission medium 130 and the second power converter 120, as discussed above. During the normal operation, the power output from the second power converter 120 is nearly equal to, or otherwise in accordance with, the power demanded by the second AC network 150. As such, the second power converter 120 operates in a steady and safe manner.

A fault condition (e.g., a load change) may occur in the power transmission network 100, for example due to a fault or load change in the second AC network 150. In the fault condition, there may be an instantaneous decrease in power exported from the second AC network 150. The transmission medium 130 may, however, initially continue to operate at the same level of power as in the normal operation. As a result, for a period of time, there may be an excess of power transferred through the first and/or second power converters 110, 120.

It is desirable that the excess power transferred through the first and/or second power converters 110, 120 in the fault condition be quickly dissipated in a safe manner, otherwise the excess power may cause damage to the first and/or second power converters 110, 120, for example, due to overcharging capacitors within the first and/or second power converters 110, 120, or overcharging lines or cables associated with the converter station 160, or damaging power electronics within the first and/or second power converters 110, 120.

The excess power may be dissipated by the power dissipating arrangement 230. Dissipating power by the power dissipating arrangement 230 tends to protect both the first power converter 110 and the second power converter 120, because both the first and second power converters 110, 120 are connected to the transmission medium 130, and thus both the first and second power converters 110, 120 are subject to any voltage changes and power transfers on the transmission medium 130. The power dissipating arrangement 230 tends to be able to protect both the first and second power converters 110, 120 and transmission medium 130.

Figure 3 is a schematic illustration (not to scale) of an embodiment of the controller 200. As discussed above, the controller 200 is configured to determine the control signal 203, to control the power dissipating arrangement 230 to dissipate energy from the power transmission medium 130, and thereby control, for example reduce, a transfer of energy between the power transmission medium 130 and the second power converter 120. For example, in an embodiment in which there is a sudden load reduction in the second AC network 150, excess power from the power transmission medium 130 may be dissipated. In another embodiment in which power reversal occurs, infeed energy from the second AC network 150 to the power transmission medium 130 may be dissipated.

In this embodiment, the controller 200 comprises a first controller 320, a second controller 330, a summing module 340, and a DBS module 350.

The first controller 320 comprises a voltage comparison module 322 and a DC module 324. The voltage comparison module 322 is configured to receive the measured DC voltage 201 and a reference DC voltage 302. The measured DC voltage 201 is a voltage measurement of the transmission medium 130 and in this embodiment is determined and provided to the controller 200 by the measurement device 215 (shown in Figure 2). The reference DC voltage 302 is a reference voltage that may be stored in, or otherwise determined by, the controller 200, or provided to the controller 200 by an external controller or system (not shown).

The voltage comparison module 322 is configured to compare the measured DC voltage 201 with the reference DC voltage 302 by subtracting the reference DC voltage 302 from the measured DC voltage 201, and output the result as a voltage difference 303.

The DC module 324 is operatively coupled to the voltage comparison module 322 such that the DC module 324 is configured to receive the voltage difference 303 and implement, for example, a PI or PID controller based on an error calculated by the voltage comparison module 322, to determine a current demand 304.

The DC module 324 is configured to output the current demand 304 from the first controller 320 to the summing module 340.

The second controller 330 comprises first and second energy conversion modules 332a, 332b, an averaging module 334, an energy comparison module 336, a threshold module 338, and a filter and gain module 339.

The first energy conversion module 332a is configured to receive a capacitor reference voltage 305. The capacitor reference voltage 305 is a reference voltage that may be stored in, or otherwise determined by, the controller 200, or provided to the controller 200 by an external controller or system (not shown). The first energy conversion module 332a is configured to convert the capacitor reference voltage 305 to a reference energy level 307 by squaring the capacitor reference voltage 305. The first energy conversion module 332a is further configured to output the reference energy level 307 to the energy comparison module 336.

The second energy conversion module 332b is configured to receive the data 202 from the power converter 120. In this embodiment, the power converter 120 comprises six valves. Each of the six valves comprises a respective plurality of capacitors, for example between about 300 and about 400 capacitors per valve. In this embodiment the data 202 comprises a respective capacitor voltage value for each of the six valves in the power converter 120, i.e., the data 202 comprises six capacitor voltage values. A capacitor voltage value of a valve is an average (e.g., a mean, median, or modal average) voltage value of the plurality of capacitors of that valve.

The second energy conversion module 332b is configured to square the values in the data 202, which in this embodiment is the six capacitor voltage values, and output the results to the averaging module 334. In this embodiment, each of the results is an average amount of energy in each valve of the power converter 120.

The averaging module 334 is configured to receive the results from the second energy conversion module 332b and calculate an average of the results. In this embodiment, the average is calculated by summing the results to determine a first product, and dividing the first product by six, i.e., the number of capacitor voltage values. In this embodiment, the average is the average energy stored in the pluralities of capacitors in the valves of the power converter 120.

The averaging module 334 is further configured to output the average as an energy level 308 associated with the power converter 120. The energy level 308 is provided to the energy comparison module 336.

Thus, in this embodiment, the energy level 308 associated with the power converter 120 is the average amount of energy stored in the plurality of capacitors of the power converter 120.

In this manner, the controller is configured to determine an energy level associated with the power converter.

The energy comparison module 336 is configured to compare the energy level 308 with the reference energy level 307, for example, by subtracting the energy level 308 from the reference energy level 307, to determine an energy difference 309. The energy comparison module 336 is further configured to output the energy difference 309 to the threshold module 338.

In this manner, the controller 200 is configured to compare the energy level 308 to a reference energy level 307 to determine an energy difference 309.

The threshold module 338 is configured to determine if the energy difference 309 has exceeded a threshold value. The threshold value may be stored in, or otherwise determined by, the controller 200, or provided to the controller 200 by an external controller or system (not shown).

In this embodiment, the threshold module 338 is further configured to, in response to the energy difference 309 exceeding the threshold value, provide the energy difference 309 to the filter and gain module 339.

The filter and gain module 339 is configured to, in response to receiving the energy difference 309, filter and/or scale the energy difference 309 and output the result, as a response signal 310, to the summing module 340.

In this manner, the second controller 330 is configured to determine a response signal 310 based on the energy difference 309.

The summing module 340 is configured to sum the response signal 310 and the current demand 304 to determine a combined demand 311. The summing module 340 is further configured to output the combined demand 311 (i.e., the sum of the response signal 310 and the current demand 304) to the DBS module 350.

The DBS module 350 is configured to use the combined demand 311 to determine the control signal 203 by implementing a PI control function.

The control signal 203 is a type of modulated signal that is provided to the power dissipating arrangement 230.

In this embodiment, the DBS module 350 is configured to determine the control signal 203 as a Pulse Width Modulation (PWM) signal that has a duty cycle or frequency that is proportional to the combined demand 311.

In this embodiment, the control signal 203 is a modulated signal that is indicative of the current demand 304 and the response signal 310.

In this manner, the controller 200 is configured to determine a control signal 203 for the power dissipating arrangement 230 based on the response signal 310.

The controller 200 is configured to output the control signal 203 to the power dissipating arrangement 230. The power dissipating arrangement 230 is configured to modulate the switches in the submodules of the switching device 220, based on the control signal 203, in order to control a voltage across the switching device 220. In this manner, the switching device 220 is controlled as a voltage source.

In a case wherein the switching device 220 is controlled to provide voltage equal to the voltage of the end portion 210 of the power transmission medium 130, the voltage difference between the end portion 210 and the switching device 220 is zero, and thus no power will be transferred to the switching device 220, or to the energy dissipation device 240.

However, if the voltage of the switching device 220 is controlled to be higher or lower than the voltage of the end portion 210, a voltage will develop between the switching device 220 and the end portion 210, which will cause a current to flow either into or out of the switching device 220 from the power transmission medium 130. A current which flows into the switching device 220 will charge the capacitors in the submodules of the switching device 220. A current which flows out of the switching device 220 will discharge the capacitors in the submodules of the switching device 220. If the average current flowing from the end portion 210 to the switching device 220 is positive, however, power will be transferred to the energy dissipation device 240 and energy will be dissipated therein.

In this manner, by providing the control signal 203 to the power dissipating arrangement 230, an amount of energy to be dissipated by the power dissipating arrangement 230 can be controlled. Thus, a level of braking (i.e., energy dissipation) provided by the power dissipating arrangement 230 to the transmission medium 130, the first power converter 110 and/or the second power converter 120, can be controlled.

Although in this embodiment the converter station 160 comprises the second power converter 120, it is to be understood that embodiments should not be limited in this way. For example, in other embodiments, a converter station may comprise the first power converter 110 instead of the second power converter 120.

Although in this embodiment the terminal 260 is connected to another pole of the power converter 120, it is to be understood that embodiments should not be limited in this way. For example, in other embodiments, the terminal 260 is connected to ground.

Although in this embodiment the energy dissipation device 240 is connected in series between the switching device 220 and the terminal 260, it is to be understood that embodiments should not be limited in this way. For example, in other embodiments, the energy dissipation device is integrated into the switching device 220. In such embodiments the energy dissipation device is not be a separate, dedicated, device that is connected in series with the switching device 220, but is instead integrated into the switching device 220.In such embodiments, plurality of submodules in the switching device 220 each comprise a switching element, an energy storage device, and an energy dissipation device.

Although in this embodiment the energy dissipation device is a high-power resistor, it is to be understood that embodiments should not be limited in this way. For example, in other embodiments, the energy dissipation device comprises a plurality of energy dissipation devices. In such embodiments, the plurality of energy dissipation devices may be separate devices connected in series between the switching device 220 and the terminal 260.

Although in this embodiment the switching device 220 comprises a plurality of series connected submodules, it is to be understood that embodiments should not be limited in this way. For example, in other embodiments, the switching device 220 comprises switching elements, or switches, without any energy storage devices. In such embodiments, the switching device 220 tends to not be controlled as a voltage source.

Although in this embodiment the switching device 220 comprises submodules, the disclosure should not be limited thereto.

In an exemplary second embodiment, the switching device 220 does not comprise submodules, but instead only comprises switching elements, or switches, without energy storage devices. In the second embodiment, the power dissipating arrangement 230 is configured to modulate the switching elements in the switching device 220 based on the control signal 203, in order to control a current flow through the switching device 220. As a result of the current flow, power tends to be transferred to the energy dissipation device 240, and thus a level of braking (i.e., energy dissipation) tends to be provided by the power dissipating arrangement 230.

In the second embodiment, the terminal 260 is connected to ground. When the switching elements are open, there is no current path between the end portion 210 of the transmission medium 130 or the second power converter 120 and ground via the switching device 220. Thus, the switching device 220 is effectively an open circuit, and the energy dissipation device 240 does not dissipate energy from the transmission medium 130 or the second power converter 120.

In the second embodiment, when some of the switches in the switching device 220 are closed, there is a current path between the end portion 210 of the power transmission medium 130 or the second power converter 120 and ground, via the energy dissipation device 240, through which current flows In the second embodiment, the energy dissipation device is a power resistor. The energy dissipation device thus dissipates energy from the transmission medium 130 when at least some of the switches in the switching device 220 are closed and current is flowing through the energy dissipation device.

In this manner, in the second embodiment wherein the switching device 220 comprises only switches and no energy storage devices, an amount of energy to be dissipated by the energy dissipation device 240 can be controlled. Thus, a level of braking (i.e., energy dissipation) provided by the power dissipating arrangement 230 to the transmission medium 130, the first power converter 110 and/or the second power converter 120, can be controlled.

Although in some of the embodiments described above the terminal 260 is connected to ground, it is to be understood that embodiments should not be limited in this way. For example, in other embodiments, the terminal 260 is connected to another pole of the power converter. In such embodiments there will be a current path from the power transmission medium 130 and the other pole of the power converter instead of to ground.

Although in some of the embodiments described above the terminal 260 is connected to another pole of the power converter, it is to be understood that embodiments should not be limited in this way. For example, in other embodiments, the terminal 260 is connected to ground. In such embodiments there will be a current path between the power transmission medium 130 and ground instead of the other pole of the power converter.

Although in the embodiments described above the data 202 comprises six capacitor voltage values related to six valves within the power converter 120, the disclosure should not be limited thereto.

In other embodiments, the data 202 can comprise any number of capacitor voltage values other than six, for example, 3, 12, 24, 100, 200, 400 etc.

In other embodiments, the capacitors of the plurality of capacitors are arranged in phase arms or phase units in the power converter 120.

In other embodiments, the capacitors of the plurality of capacitors are arranged in positive or negative phase arms of the power converter 120.

Although in the embodiments described above the number of capacitors in each valve could be in the range of 300-400, the disclosure should not be limited thereto. In other embodiments, the number of capacitors in each valve, or the plurality of capacitors in the power converter 120, can be any number.

Although in the embodiments described above the data 202 comprises information related to electrical parameters of the power converter 120, the disclosure should not be limited thereto. In other embodiments, the data 202 comprises power, energy and/or current information related to electrical components of the power converter 120. The electrical component may be, for example, capacitors, inductors, resistors, transistors, etc.

Although in the embodiments described above the averaging module determines a mean average, the disclosure should not be limited thereto. In other embodiments, the averaging module determines a modal or median average instead of a mean average.

Although in the embodiments described above the second controller 330 comprises the averaging module 334, the disclosure should not be limited thereto. In other embodiments, the second controller 330 does not comprise the averaging module 334. In such embodiments, the second energy conversion module 332b is configured to output the result directly to the energy comparison module 336 as the energy level. In such embodiments, the energy level is an average amount of energy in each vale. In such embodiments, the energy comparison module 336 is configured to compare the energy level with the reference energy.

Although in some of the embodiments described above the second controller 330 comprises the averaging module 334, the disclosure should not be limited thereto. In other embodiments, the second controller 330 does not comprise the averaging module 334, but instead comprises a summing module. In such embodiments, the second energy conversion module 332b is configured to output the results to the summing module, and the summing module is configured to sum the results to determine the energy level. In such embodiments, the energy level is a sum of the average amount of energy in each of the valves of the power converter. In such embodiments, the summing module is further configured to output the energy level to the energy comparison module 336, which is configured to compare the energy level with the reference energy.

Although in some of the embodiments described above the threshold module 338 is configured to provide the energy difference 309 to the filter and gain module 339, the disclosure should not be limited thereto. In other embodiments, the threshold module 338 does not provided the energy difference 309 to the filter and gain module 339. In such embodiments, the threshold module 338 is configured to, in response to the energy difference 309 exceeding the threshold value, provide the energy difference 309 directly to the summing module 340. In such embodiments, the response signal 310 is the energy difference 309.

Although in some of the embodiments described above the DBS module 350 is configured to determine the control signal 203 as a Pulse Width Modulation (PWM) signal that has a duty cycle or frequency that is proportional to the combined demand 311, the disclosure should not be limited thereto. In other embodiments, the DBS module 350 is configured to determine the control signal 203 as a modulated square wave having a magnitude or frequency that is proportional to the combined demand 311.

In addition to the above-described features, the controller 200 may comprise a memory and at least one processor. The memory may comprise computer-readable instructions, which when executed by the at least one processor, cause the controller to perform the method/s described herein.

The controller 200 may also comprise a transceiver arrangement which may comprise a separate transmitter and receiver. The transceiver arrangement may be used to operatively communicate with other components or features of embodiments described herein either directly or via a further interface such as a network interface. The transceiver arrangement may for instance send and receive control signals using transmitter and receiver. The control signals may contain or define electrical control parameters such as reference currents or reference voltages.

The at least one processor is capable of executing computer-readable instructions and/or performing logical operations. The at least one processor may be a microcontroller, microprocessor, central processing unit (CPU), field programmable gate array (FPGA) or similar programmable controller. The processor is communicatively coupled to the memory and may in certain embodiments be coupled to the transceiver.

The memory may be a computer readable storage medium. For instance, the memory may include a non-volatile computer storage medium. For example, the memory may include a hard disk drive, flash memory etc.

The controller may further comprise a user input device and/or output device.

The controller 200 may additionally include a user input device interface and/or a user output device interface, which may allow for visual, audible or haptic inputs/outputs. Examples include interfaces to electronic displays, touchscreens, keyboards, mice, speakers and microphones.

Figure 4 is a process flow chart showing certain steps of an embodiment of a method 400 for controlling the power dissipating arrangement 230. The controller 200 can be operated according to the method 400.

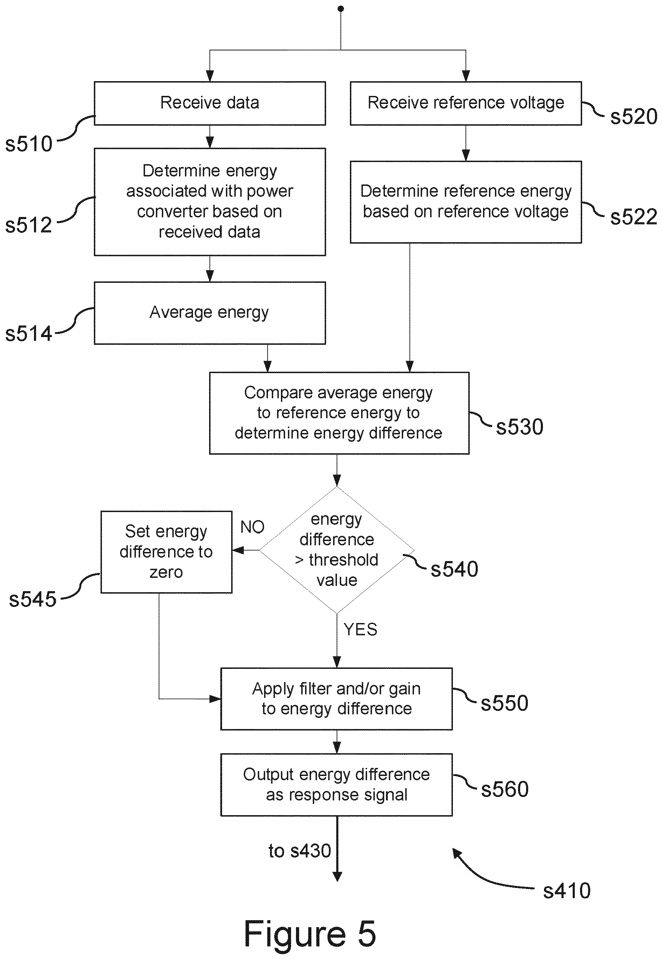

At step s410, the second controller 330 determines the response signal 310 and provides the response signal 310 to the summing module 340. The determination of the response signal 310 by the second controller 330 will be described in more detail later below with reference to Figure 5, after the description of Figure 4.

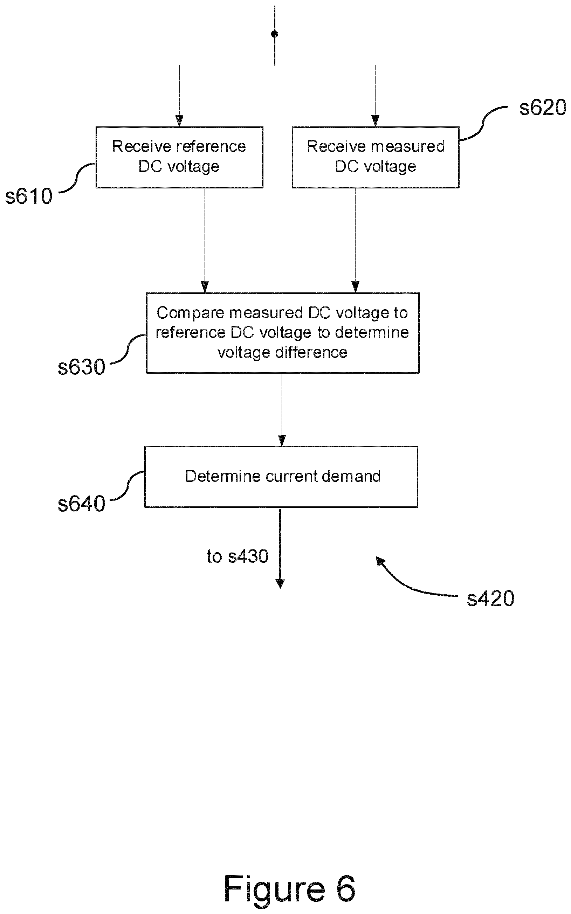

At step s420, the first controller 320 determines the current demand 304 and provides the determined current demand 304 to the summing module 340. The determination of the current demand 304 by the first controller 320 will be described in more detail later below with reference to Figure 6, after the descriptions of Figures 4 and 5.

At step s430, the summing module 340 sums the current demand 304 and the response signal 310 and outputs the result as a combined demand 311 to the DBS module 350.

At step s440, the DBS module 350 determines the control signal 203 by implementing a PI control function. The DBS module 350 then outputs the control signal 203 to the power dissipating arrangement 230.

At step s450, the power dissipating arrangement 230 receives the control signal 203, and the power dissipating arrangement 230 uses the control signal 203 to control a switching of the switching device 220. As discussed above, the switching device 220 can be controlled in a manner so as to affect a certain level or amount of energy transfer, or braking, between components of the power transmission network 100 and the energy dissipation device 240.

Thus, an embodiment of a method 400 for controlling the power dissipating arrangement 230 is provided.

Figure 5 is a process flow chart showing steps of a process performed at step s410 of the method 400 for controlling the power dissipating arrangement 230. Specifically, Figure 5 shows a process for determining the response signal 310 by the second controller 330.

At step s510, the second energy conversion module 332b receives the data 202 from the power converter 120. In this embodiment, the data 202 comprises a respective capacitor voltage value for each of the six valves in the power converter 120, as discussed above.

At step s512, the second energy conversion module 332b squares the values in the data 202. In this way, the second energy conversion module 332b can determine an average amount of energy in each valve of the power converter 120. The second energy conversion module 332b then outputs the results to the averaging module 334.

At step s514, the averaging module 334 receives the results from the second energy conversion module 332b and calculates an average of the results. In this way, the averaging module 334 can calculate an average energy stored in the pluralities of capacitors in the valves of the power converter 120. The average is calculated by summing the results to determine a first product, and dividing the first product by six. The averaging module 334 then outputs the average, as an energy level 308 associated with the power converter 120, to the energy comparison module 336.

In this manner, the controller 200 determines an energy level associated with the power converter.

At step s520, the first energy conversion module 332a receives the capacitor reference voltage 305. As discussed above, the capacitor reference voltage 305 is a reference voltage that may be stored in, or otherwise determined by, the controller 200, or provided to the controller 200 by an external controller or system (not shown).

At step s522, the first energy conversion module 332a converts the capacitor reference voltage 305 to a reference energy level 307 by squaring the capacitor reference voltage 305. The first energy conversion module 332a then outputs the reference energy level 307 to the energy comparison module 336.

The steps s520 and s522 may be performed in parallel to the steps s510 to s514.

At step s530, the energy comparison module 336 compares the energy level 308 with the reference energy level 307. In this embodiment, this is done by subtracting the energy level 308 from the reference energy level 307. The energy comparison module 336 outputs the result as an energy difference 309 to the threshold module 338.

In this manner, the controller 200 compares the energy level to a reference energy level to determine an energy difference.

At step s540, the threshold module 338 determines if the energy difference 309 has exceeded a threshold value. The threshold value may be stored in, or otherwise determined by, the controller 200, or provided to the controller 200 by an external controller or system (not shown).

If, at step s540, it is determined that the energy difference 309 has not exceeded the threshold value, then the method proceeds to step s545. This indicates that the power transmission network 100 is in a normal operating condition.

At the step s545, the second controller 330, in response to the energy difference 309 not exceeding the threshold value, sets the energy difference to zero and outputs the energy difference to the filter and gain module 339. The method then proceeds to step s550.

However, if, at step s540, it is determined that the energy difference 309 has exceeded the threshold value, then the second controller 330, in response to the energy difference 309 exceeding the threshold value, outputs the energy difference to the filter and gain module 339. The energy difference 309 exceeding the threshold value indicates that the power transmission network 100, or the power station 160, is at or nearing a fault condition. The method then proceeds to step s550.

At the step s550, the filter and gain module 339 filters and/or scales the energy difference 309.

At a step s560, the filter and gain module 339 outputs the filtered and/or scaled energy difference 309, as the response signal 310, to the summing module 340.

In this manner, the controller 200 determines a response signal 310 based on the energy difference 309.

Additionally, if it was determined at step s540 that the energy difference 309 did not exceed the threshold value, and so the second controller set the energy difference to zero, the response signal 310 would contribute a zero-value to the combined demand 311, which tends to have no effect on the amount of power dissipated by the power dissipating arrangement 230.

Thus, a process for determining the response signal 310 by the second controller 330 is provided.

Figure 6 is a process flow chart showing steps of a process performed at step s420 of the method 400 for controlling the power dissipating arrangement 230. Specifically, Figure 6 shows a process for determining the current demand 304 by the first controller 320.

At step s610, the voltage comparison module 322 receives the reference DC voltage 302. The reference DC voltage 302 is a reference voltage that may be stored in, or otherwise determined by, the controller 200, or provided to the controller 200 by an external controller or system (not shown).

At step s620, the voltage comparison module 322 receives the measured DC voltage 201. The measured DC voltage 201 is a voltage measurement of the transmission medium 130 and in this embodiment is determined and provided to the controller 200 (and thus to the voltage comparison module 322) by the measurement device 215 (shown in Figure 2).

The steps s610 and s620 can be performed in parallel.

At step s630, the voltage comparison module 322 compares the measured DC voltage 201 with the reference DC voltage 302 by subtracting the reference DC voltage 302 from the measured DC voltage 201, and outputs the result as a voltage difference 303 to the DC module 324.

At a step s640, the DC module 324 receives the voltage difference 303 and implements a PI controller based on the voltage difference 303 calculated by the voltage comparison module 322, to determine a current demand 304.

In this manner, the controller determines a current demand 304 based on the voltage difference.

Thus, a process for determining the current demand 304 by the first controller 320 is provided.

It should be noted that certain of the process steps depicted in the flowcharts of Figures 4-6 and described above may be omitted or such process steps may be performed in differing order to that presented above and shown in Figures 4-6. Furthermore, although all the process steps have, for convenience and ease of understanding, been depicted as discrete temporally-sequential steps, nevertheless some of the process steps may in fact be performed simultaneously or at least overlapping to some extent temporally.

By implementing the methods 400, the controller 200 tends to rapidly determine when a normal operating condition may become a fault condition. This is because determining the energy level of the power converter 120 (by virtue of implementing the step s410), and comparing the energy level to a reference energy level, tends to give a faster indication of an overvoltage or excess energy condition in the power converter 120, compared to a conventional method. Thus, the method 400 tends to rapidly determine a fault condition or a pre-fault condition, compared to conventional methods.

The method 400 determines the response signal 310. The response signal 310 tends to cause an early insertion of the control signal 203 (compared to a conventional method), which tends to prevent an energy imbalance in the power converter 120. A rapid activation of the power dissipating arrangement 230 in this manner tends to improve grid stability during a sudden grid event or grid disturbance. As the controller 200 does not rely on external measurements for activating the power dissipating arrangement 230, but instead relies on the power converter energy level or capacitor voltages, it tends to prevent accumulation of excess energy in the power converter capacitors and thereby tends to provide improved protection to the power converter during sudden grid events.

In addition to the response signal 310, the method 400 also determines a current demand 304 for the DBS module 350 based on the measured voltage of the transmission medium 130. Using the current demand 304 to determine the control signal 203 tends to provide a reliable means of determining the control signal 203.

In order to provide the response signal 310 to the DBS module 350 without compromising the current demand 304, at the step s430 both signals are summed to determine the combined demand 311. As a result, the control signal 203 is indicative of both of the current demand 304 and the response signal 310, which tends to improve the reliability of the control signal 203 and thus the power dissipating arrangement 230.

Furthermore, if either the current demand 304 or the response signal 310 is at a zero-value (for example, because it has not yet been produced, or it has been determined by the respective first or second controller to be zero), then the summing module 340 will forward the signal which is non-zero to the DBS module 350, because the zero-value signal will contribute zero to the combined demand 311. In this manner, both of the current demand 304 and the response signal 310 tend to be unable to compromise (i.e., cause a delay in, or otherwise prevent) the DBS module 350 from generating a control signal based on the other signal.

In this manner, the methods and controller disclosed herein tend to provide extra security or reliability to power transmission networks and the power transmission capability of such networks are enhanced. Furthermore, the methods and controller disclosed herein tend to avoid excessive stresses on the converter equipment, during instantaneous power change events.

Although in this embodiment the data 202 is provided to the controller 200 by the power converter 120, it is to be understood that embodiments should not be limited in this way. For example, in other embodiments, the data 202 is provided to the controller 200 by additional measurement circuitry or equipment (not shown), or is measured by the controller 200 itself.

Although in this embodiment the step s550 is performed, it is to be understood that embodiments should not be limited in this way. For example, in other embodiments the step s550 is not performed, and the threshold module 338, in response to the energy difference 309 exceeding the threshold value, provides the energy difference 309 directly to the summing module 340. In such embodiments, the response signal 310 is the energy difference 309.

The disclosure is related to a controller for controlling a power transmission network, the power transmission network comprising a first (offshore) power conversion means, a second (onshore) power conversion means, a power transmission line electrically connected between the first and second power conversion means, and a power dissipation system (or DBS) connected to the power transmission line, the controller configured to adjust the operation of the power dissipation system in accordance with a measured instantaneous operating parameter of the second power conversion means.

A method of controlling a power transmission network, the power transmission network comprising a first power conversion means having respective first AC and DC sides, a second power conversion means having respective second AC and DC sides, a power transmission means electrically connecting the first and second DC sides of the first and second power conversion means respectively, and a power dissipation system connected to the power transmission means, the method comprising:
measuring an instantaneous operating parameter of the second power conversion means; and
adjusting the operation of the power dissipation system in accordance with the measured instantaneous operation parameter of the second power conversion means.

The first and second power conversion means are multilevel modular power converters, each comprising a plurality of valves.

The instantaneous operating parameter is an instantaneous average energy of the valves of the second power conversion means or an instantaneous average value of capacitor voltages of the valves of the second power conversion means.

Adjusting the operation of the power dissipation system in accordance with the measured instantaneous operation parameter of the second power conversion means comprises:
computing an error between the measured instantaneous operating parameter and a reference operating parameter,
upon determination that the computed error is more than a threshold value, altering a control parameter to cause early insertion of the power dissipation system.

The control parameter is a DC voltage threshold value or a current demand reference value for the power dissipation system.

The early insertion of the power dissipation system can be caused by reducing the voltage threshold value or by increasing the current demand reference value.

The power dissipation system is a dynamic braking system comprising at least one valve module connected in series with one or more resistors.

## Claims

1. A controller (200) for controlling a power dissipating arrangement (230) connected to a converter station (160), wherein the converter station (160) comprises a power converter (120) that is connected to a power transmission medium (130), the controller (200) configured to:
determine a parameter associated with the power converter (120);
use the parameter to determine a control signal (203) for the power dissipating arrangement (230); and
provide the control signal (203) to the power dissipating arrangement (230); wherein
the power dissipating arrangement (230) is configured to use the control signal (203) to control a switching of the power dissipating arrangement (230) to dissipate energy from the power transmission medium (130) and reduce a transfer of energy between the power transmission medium (130) and the power converter (120).

2. The controller of claim 1, wherein to determine the parameter associated with the power converter (120), the controller is configured to:
determine an energy level (308) associated with the power converter (120); and
compare the energy level (308) to a reference energy level (307) to determine an energy difference (309), wherein the parameter is the energy difference (309).

3. The controller of claim 2, wherein to use the parameter to determine the control signal (203) the controller is configured to:
determine the control signal (203) in response to the energy difference (309) exceeding a threshold value.

4. The controller of claim 3, wherein the threshold value is less than or equal to 5%, or 0.05 per unit, of the reference energy level (307).

5. The controller of any one of claims 2 to 4, wherein the power converter comprises a plurality of valves, each valve comprising a plurality of capacitors; wherein
to determine the energy level (308) associated with the power converter, the controller (200) is configured to:
receive, for each of the plurality of capacitors, a respective capacitor voltage value (202); and
calculate an average amount of energy stored in the pluralities of capacitors using the received respective capacitor voltage values (202); and
the energy level (308) associated with the power converter is the average amount of energy stored in the pluralities of capacitors.

6. The controller of any one of claims 2 to 4, wherein the power converter comprises a plurality of valves, each valve comprising a plurality of capacitors; wherein
to determine the energy level (308) associated with the power converter, the controller (200) is configured to:
receive, for each of the plurality of capacitors, a respective capacitor voltage value (202);
calculate an amount of energy stored in each of the plurality of capacitors using the received respective capacitor voltage values (202); and
sum the amount of energy stored in each of the plurality of capacitors to determine a total amount of energy in the pluralities of capacitors; and
the energy level (308) associated with the power converter is the total amount of energy stored in the pluralities of capacitors.

7. The controller of any one of claims 2 to 6, wherein
the controller is further configured to determine a response signal (310) by filtering and/or scaling the energy difference (309); and
the control signal (203) is a modulated signal that has a duty cycle, magnitude, and/or frequency that is proportional to the response signal (310).

8. The controller of claim 7, wherein the controller (200) is further configured to:
receive a measured DC voltage (201) of the transmission medium (130);
compare the measured DC voltage (201) with a reference DC voltage (302) to determine a voltage difference (303);
implement a Proportional-Integral controller based on the voltage difference (303) to determine a current demand (304);
sum the current demand (304) and the response signal (310) to determine a combined demand (311); and
use the combined demand (311) to determine the control signal (203).

9. A system for use with a power transmission network (100), the system comprising:
a power dissipating arrangement (230) connected to the power transmission network (100); and
the controller (200) of any preceding claim, the controller being configured to control the power dissipating arrangement (230).

10. The system of claim 9, wherein:
the power dissipating arrangement (230) comprises:
a plurality of submodules (220), wherein each submodule comprises switching elements and an energy storage device, wherein the plurality of submodules (220) is configured as a controllable voltage source; and
an energy dissipation device (240) connected in series with the plurality of submodules (220); and
wherein the system is configured to use the control signal (203) to modulate the switching elements in the plurality of submodules, in order to control a transfer of energy from the power transmission network (100) to the energy dissipation device (240).

11. The system of claim 9, wherein:
the power dissipating arrangement (230) comprises a plurality of submodules (220), wherein each submodule comprises switching elements, a resistive element, and an energy storage device; wherein
the plurality of submodules is configured as a controllable voltage source; and
the system is configured to use the control signal (203) to modulate the switching elements in the plurality of submodules in order to control a transfer of energy from the power transmission network (100) to the resistive elements of the plurality of submodules.

12. The system of claim 9, wherein:
the power dissipating arrangement (230) comprises:
a plurality of switches (220) configured to connect or disconnect the power dissipating arrangement (230) from the power transmission network (100); and
an energy dissipation device (240) connected in series with the plurality of switches (220); and
the system is configured to use the control signal (203) to modulate the plurality of switches (220), in order to control a transfer of energy from the power transmission network (100) to the energy dissipation device (240).

13. A power transmission network (100) comprising:
an AC network (140, 150);
a power transmission medium (130);
a converter station (160) configured to transfer energy between the power transmission medium (130) and the AC network (150); and
the system of any one of claims 9 to 12 connected to the power transmission network (100).

14. A method for controlling a power dissipating arrangement (230) connected to a converter station (160), wherein the converter station comprises a power converter (120) that is connected to a power transmission medium (130), the method (200) comprising:
determining, by a controller (200), a parameter associated with the power converter (120);
using, by the controller (200), the parameter to determine a control signal (203) for the power dissipating arrangement (230); and
providing, by the controller (200), the control signal (203) to the power dissipating arrangement (230); wherein
the power dissipating arrangement (230) is configured to use the control signal (203) to control a switching of the power dissipating arrangement (230) to dissipate energy from the power transmission medium (130) and reduce a transfer of energy between the power transmission medium (130) and the power converter (120).

15. The method of claim 14, wherein
determining the parameter associated with the power converter (120) comprises:
determining, by the controller (200), an energy level (308) associated with the power converter (120); and
comparing, by the controller (200), the energy level (308) to a reference energy level (307) to determine an energy difference (309), wherein the parameter is the energy difference (309); and
using the parameter to determine the control signal (203) comprises determining, by the controller (200), the control signal (203) in response to the energy difference (309) exceeding a threshold value.
